# DEMANDE DE BREVET EUROPEEN

(11) **EP 1 747 718 A1**
(43) Date de publication de la demande: **31.01.2007**
(21) Numéro de dépôt: 06291184.7
(22) Date de dépôt: 21.07.2006
(51) Int. Cl.: A01K 1/06

(54) **Barrière à cornadis de sécurité**

(30) Priorité: 29.07.2005 FR 0508107
(71) Demandeur: Jourdain S.A., 45300 Escrennes (FR)
(72) Inventeur: Jourdain, Dominique Didier Martial, 45300 Fresnay les Chaumes (FR)
(74) Mandataire: Vander-Heym, Serge Henri Marcel

(57) **Abrégé**

Barrière à cornadis de sécurité caractérisée en ce que le verrouillage du bras pivotant (3) est assuré par deux leviers pivotants (5), articulés selon des axes parallèles à celui dudit bras et dont les paliers sont portés par le longeron supérieur (1), usuel, lesdits leviers reposant sous l'effet de leur poids contre une tringle pivotante (2), présentant, au niveau du contact, une section aplatie.

## Description

La présente invention est relative à une barrière à cornadis de sécurité. Une telle barrière comporte un certain nombre d'ouvertures délimitées, chacune, par deux longerons parallèles, par un montant vertical et par un bras pivotant, dont l'axe de rotation est porté par un montant réunissant les deux longerons. Ce bras peut occuper trois positions, dont deux obliques pour délimiter des ouvertures triangulaires qui, selon la position dudit bras, se présentent soit pointe en bas soit pointe en haut et une troisième position, sensiblement verticale, selon laquelle ledit bras est verrouillé de façon, selon le cas, à maintenir l'animal entravé ou à l'empêcher de traverser la barrière.

Généralement, le bras pivotant présente, à sa partie supérieure, une fourche, dont les branches s'étendent librement de part et d'autre du longeron supérieur, comportant des moyens pour coopérer avec une tringle pivotante disposée au-dessus dudit longeron, afin de réaliser le verrouillage dudit bras. La rotation axiale de la tringle permet de déverrouiller tous les bras.

Des dispositifs de ce genre sont connus, notamment, par le brevet européen 1040753.

Tous ces dispositifs nécessitent de prévoir des usinages et, ou, des soudures sur la tringle pivotante et comportent des organes qui frottent en permanence sur celle-ci, ce qui affaibli cette dernière qui, comme on le sait, est soumise à des efforts importants résultant de la poussée des animaux.

A cela s'ajoute le fait, que de nombreux dispositifs ne sont pas fiables lorsque le bras pivote brusquement, en d'autres termes : le verrouillage n'a pas toujours lieu.

Le dispositif de l'invention qui remédie à ces inconvénients, est remarquable en ce que le verrouillage du bras pivotant est assuré par deux leviers pivotants, articulés selon des axes parallèles à celui dudit bras et dont les paliers sont portés par le longeron supérieur, usuel, lesdits leviers reposant, sous l'effet de leur poids, contre une tringle pivotante, présentant au niveau du contact une section aplatie.

Chaque levier présente, au moins, une extension transversale formant une butée contre laquelle la partie supérieure du bras, judicieusement conformée, prend appui.

Les deux leviers sont disposés de façon à prendre appui contre la tringle pivotante en des points situés entre les axes d'articulations desdits leviers.

La présente invention sera mieux comprise par la description qui va suivre faite en se référant aux dessins annexés à titre d'exemple indicatif, seulement, sur lesquels :
- la figure 1 montre, en élévation, le dispositif de l'invention, le levier pivotant étant montré dans la position verrouillée ;
- la figure 2 est une vue en perspective de la figure 1 ;
- les figures 3 et 4 sont des vues analogues à celle 1, montrant le début du verrouillage ;
- la figure 5 est une vue analogue à celle 1, les organes mobiles (leviers et tringle pivotante) étant représentés selon une position dite « libre », c'est-à-dire dans une position ou l'animal ne peut pas être entravé ;

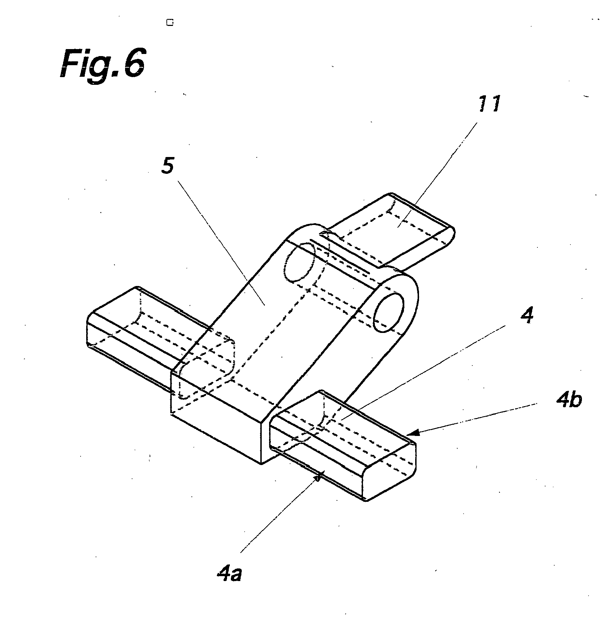

- la figure 6 est une vue, en perspective, d'un levier pivotant.

De la façon connue, on désigne par 1 le longeron supérieur, par 2 la tringle pivotante et par 3 le bras pivotant.

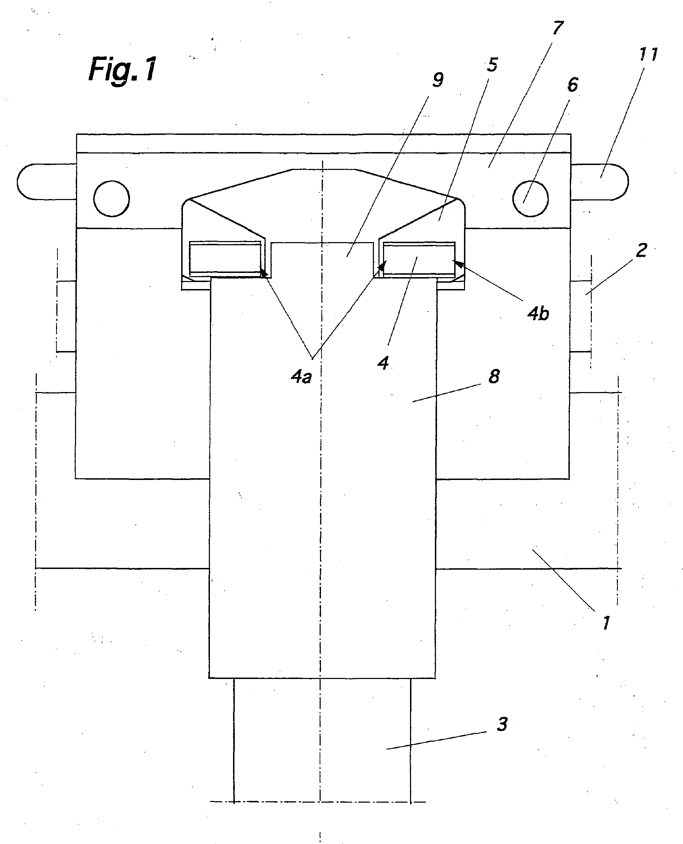

Selon l'invention, et comme cela ressort de la figure 1, le bras 1 peut être immobilisé en rotation entre deux surfaces de butée 4a.

Chaque surface 4a forme l'une des faces d'une extension 4, portée par un levier pivotant 5 articulé selon un axe 6, ledit levier étant porté par une pièce 7, en forme d'U renversé, rendu solidaire, par ses branches du longeron 1.

Les extrémités des deux leviers 5 reposent sur la tringle 2 et ceux-ci sont disposés de façon à prendre appui contre ladite tringle 2, de section aplatie, en des points situés entre les axes 6.

De la façon connue, la partie supérieure du bras 3 est pourvue d'une fourche dont les branches 8 s'étendent de part et d'autre du longeron 1 et entre les extensions 4, en position de verrouillage du bras.

Pour réduire la distance entre les axes 6, la partie supérieure de chaque branche 8 a été découpée de façon à présenter une dent 9, dont les champs 9a peuvent coopérer en appui contre les surfaces 4a et 4b correspondantes.

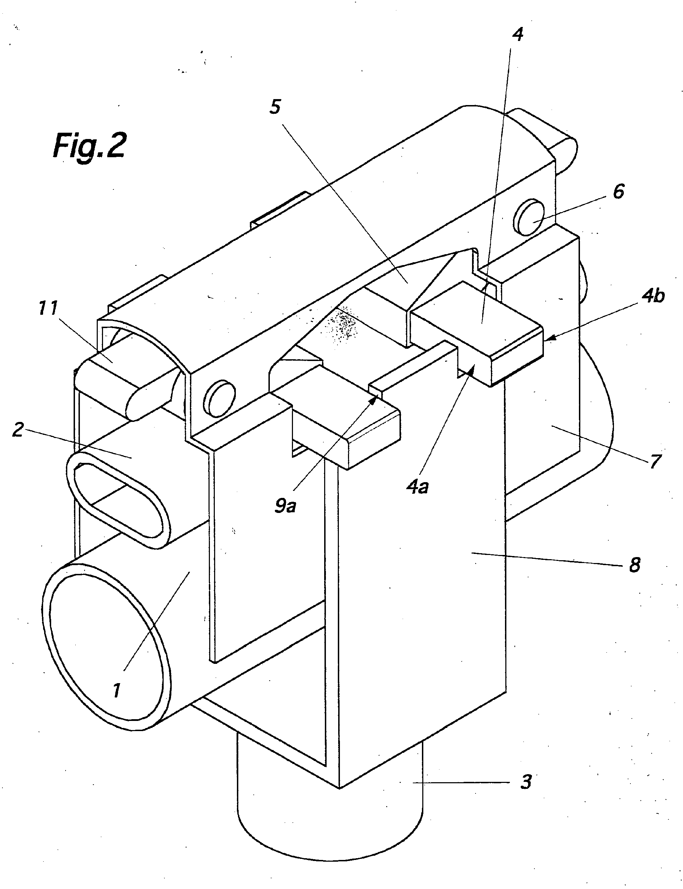

Il est à noter, que l'ensemble formé par le bras, par sa fourche et par l'axe usuel d'articulation dudit bras (non représenté) est judicieusement conformé pour que le parallélisme entre les faces latérales 4a et 4b et Ies champs 9a de la dent 9 ne soit possible que lorsque le bras est en position verrouillée (figures 1 et 2).

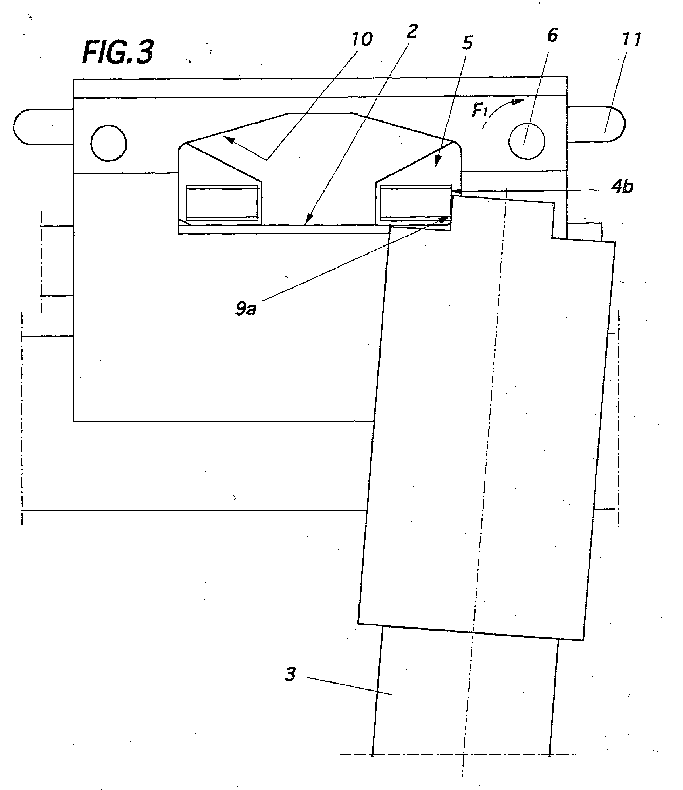

Lorsque le bras 3 pivote (de la droite vers la gauche de la figure 3 par exemple), sous l'effet de l'animal qui relève ou abaisse son encolure, le champ 9a rencontre celui 4b de l'extension correspondante. Comme, Jors de cette rencontre, les deux surfaces ne sont pas parallèles, un effet de rampe se produit qui fait pivoter le levier 5 selon la flèche F₁. La dent 9 passe sous l'extension et vient heurter l'extension de l'autre levier. Le premier levier pivote en sens inverse, sous l'effet de son poids, et verrouille le bras.

Sous l'effet du choc, le second levier est appliqué contre la tringle 2 car, à ce moment, l'effet de rampe précité est inversé.

Pour permettre aux extensions 4 de coopérer avec le bras, les branches de la pièce 7 présentent des ouvertures 10. La partie supérieure de ces ouvertures a aussi pour fonction de limiter le pivotement des leviers lorsque ceux-ci son heurtés par le bras 3.

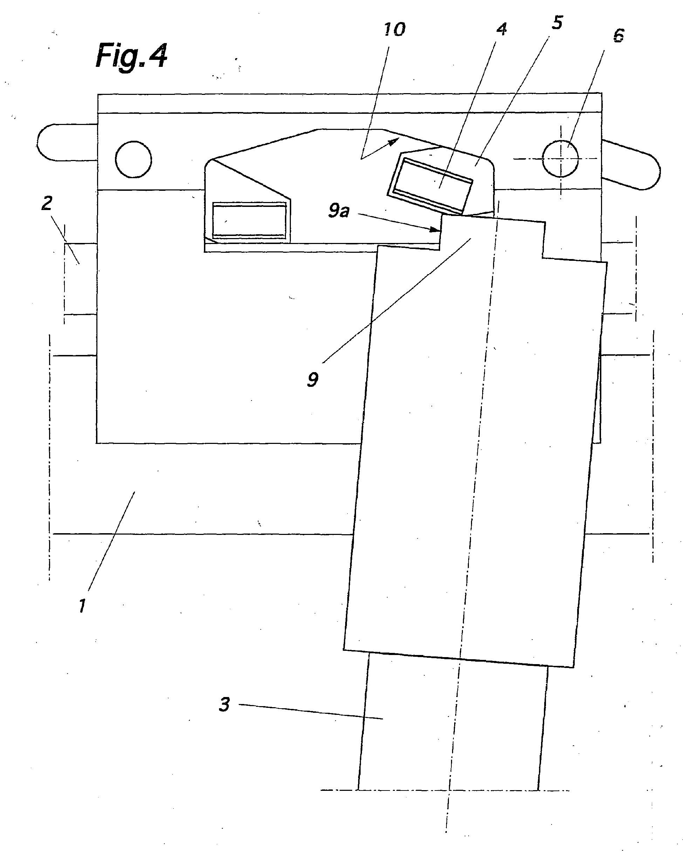

Sur les figures 2 à 4 la tringle est disposée de façon à ce que les extensions des leviers soient situées sur la trajectoire de la dent 9 (le grand axe de la section est horizontal).

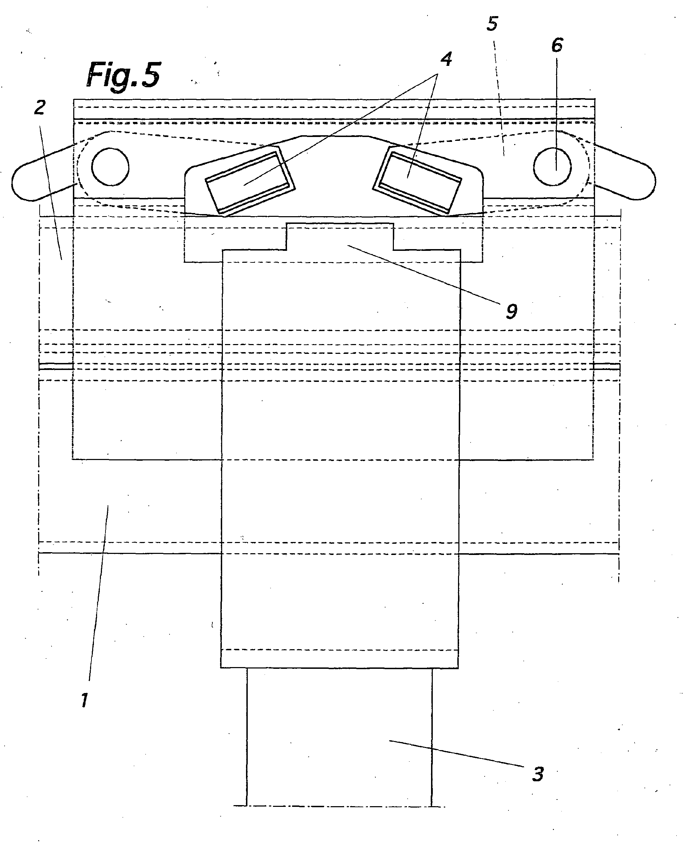

Par une rotation de la tringle (d'un quart de tour) on peut placer les extensions des leviers dans la position montrée sur la figure 5, position selon laquelle le bras 3 peut pivoter sans rencontrer une extension. Cette position de la tringle rend le verrouillage impossible.

Selon une autre caractéristique de l'invention, chaque levier présente une queue 11, permettant, par une pression sur cette dernière de libérer le bras dans un sens ou dans l'autre sans modifier l'état des autres cornadis (sans faire pivoter la tringle 2).

Il ressort des explications ci-dessus, que le système est symétrique par rapport à un plan vertical, mais il pourrait fonctionner si la fourche du bras était limitée à l'une de ses branches, chaque levier pesant ne comportant alors qu'une extension latérale.

La pièce 7 peut être réalisée en deux parties, chacune formant le palier d'un levier.

Les extensions 4 peuvent se présenter sous la forme d'embouts cylindriques dont les axes s'étendent selon une direction qui est sensiblement perpendiculaire au plan dans lequel le bras peut pivoter. Dans ce cas, en position verrouillée, l'extrémité supérieure du bras s'étend au-delà du plan horizontal contenant les axes des extensions cylindriques (partie supérieure de la dent 9 dans l'exemple représenté).

## Revendications

1. Barrière à cornadis de sécurité **caractérisée en ce que** le verrouillage du bras pivotant (3) est assuré par deux leviers pivotants, articulés selon des axes parallèles à celui dudit bras et dont les paliers sont portés par le longeron supérieur (1), usuel, lesdits leviers reposant sous l'effet de leur poids contre une tringle pivotante (2), présentant, au niveau du contact, une section aplatie.

2. Barrière selon la revendication 1, **caractérisée en ce que** chaque levier présente, au moins, une extension latérale (4) interposée sur la trajectoire de la partie supérieure du bras (3).

3. Barrière selon la revendication 2, **caractérisée en ce que** les deux leviers prennent appui contre la tringle pivotante en des points situés entre les axes d'articulation desdits leviers.

4. Barrière selon la revendication 3, **caractérisée en ce que** la partie supérieure du bras (3) présente, au moins, une dent (9), susceptible, en position de verrouillage du bras d'être disposée entre les extensions de leviers.

5. Barrière selon la revendication 4, **caractérisée en ce que** l'ensemble formé par le bras (3) par son axe d'articulation usuel et les leviers (5) est dimensionné de façon à ce que le parallélisme entre les surfaces d'appui (4a-4b) et les champs (9a) de la dent (9),ou ceux de la branche de la fourche (7), ne soit possible que lorsque le bras est en position verrouillée.

6. Barrière selon l'une des revendications 1 à 5, **caractérisée en ce que** chaque levier présente une queue (11) permettant, par une pression, de déverrouiller le bras correspondant sans modifier la position de la tringle pivotante.

7. Barriere selon l'une des revendications 1 à 6, **caractérisée en ce que** la tringle pivotante présente une section aplatie, uniforme et sans solution de continuité.
